# EUROPEAN PATENT SPECIFICATION

(11) **EP 1 989 150 B1**
(45) Date of publication and mention of the grant of the patent: **05.12.2012**
(21) Application number: 06717216.3
(22) Date of filing: 27.02.2006
(51) Int. Cl.: C02F 3/30, C02F 3/12

(54) **EQUIPMENT FOR BIOLOGICAL TREATMENT OF WASTE WATER**
VORRICHTUNG ZUR BIOLOGISCHEN BEHANDLUNG VON ABWASSER
ÉQUIPEMENT DE TRAITEMENT BIOLOGIGUE DES EAUX USÉES

(43) Date of publication of application: 12.11.2008
(73) Proprietor: Ecowa, A.S., 971 01Prievidza (SK)
(72) Inventor: JARABINSKY, Vladimir, 064 01 Stara Lubovna (SK); RUSIN, Jan, 085 01 Bardejov (SK)
(74) Representative: Bachrata, Magdaléna
(86) International application number: PCT/SK2006/000006
(87) International publication number: WO 2007/097722

(56) References cited:
- FR-A- 2 031 412
- GB-A- 1 258 080
- US-A- 3 195 727
- US-A- 3 415 378
- US-A- 5 206 168
- US-A1- 2005 000 873

## Description

### Technical Field

The invention concerns equipment for biological treatment of waste water from small local sources of pollution.

### State of Art

Biological wastewater treatment plants (WTP) use activated sludge, which is a mixture of various bacteria and fine microorganisms. The sludge needs for its own existence nutrients contained in waste water, and by withdrawing the nutrients it purifies the waste water. The activation (purifying) process is possible only under continued oxygenation, which is usually achieved by blasting air into the activation tank.

For the waste water treatment, there are often used microorganisms firmly adhered to a substrate in the form of various biofilters and biocontactors, which are realized as biological rotors of various structural designs, for example as biodiscs of coiled perforated hoses, which are described in CS 257 847, in EP 198 451 and in DE 2 919 221. These may be interconnected with a shaft housing as, for example, in PCT WO 81/00101.

The solution according to CS 271 819, which is the same as in EP 339 907, may be regarded as a combination of simple biocontactors, described, for example, in FR 2 235 090, with biodiscs formed of hoses. In this solution, the biocontactor areas are extended by the inner and outer area of the hose segments with a greater diameter, into which another tubes with smaller diameters may be inserted, eventually also the solution specified in GB 2 197 308 and EP 301 237 A2.

A great disadvantage of all these solutions consists in high technical demands on rotating discs which spin great amounts of mass, which operation is accompanied with high energy demands. Moreover, these equipments exhibit high failure rate, resulting in frequent WTP downtimes and high service costs.

A further kind of WTP is that with an activation system with floating sludge (in a fluid layer), where the sludge flocks are mixed with waste water and air.

Activation WTP-s with floating sludge, known so far, may be divided into systems with continuous flow of waste water through the activation tank, and systems with discontinuous flow.

This method of treatment, described, for example, in the patent SK 281 134 (identical with PCT/SE92/00797), is the case of WTP-s with discontinuous flow, where the waste water is fed into an equalizing tank and from there it is gradually pumped over into the activation tank. After treating the waste water, the activation process is interrupted, i. e. aeration and possible agitating of water in the activation tank are stopped and after centrifuging off the sludge the treated water is discharged. The activation tank starts then operating again and the described cycle is repeated. Compared with continuous treatment, no separation (settling) tank is necessary.

However, a.great disadvantage of this treatment method is the fact that it is difficult to achieve - especially with small residential treatment plants - the operational discipline, i. e. interruption of inflow during withdrawing the treated water. The solution sometime requires the existence of a pumped-storage reservoir. A disadvantage consists also in high demands related to the control of WTP operation.

In the systems with continuous feeding, as in the solution described in CS AO 228 208, the sewage waters treating plant consists of two tanks. In one tank, there is created a separating space over a denitrifying space, and in the other tank, there is created an activation space. The separating space is separated from the denitrifying space by an inclined wall and interconnected with it by means of a sludge withdrawal.

A disadvantage of such solution is the necessity to use two tanks, which in the case of their separated positioning means high space demands. A disadvantage is also the fact that there is no aerobic treatment.

Another known equipment for nitrifying and denitrifying organic substances in sewage waters according to CS AO 248 616 is designed in such a way that the activation space is divided by a dividing partition to an aerated and a non-aerated part. The dividing partition is located partially or fully over the water level, and it creates a gap at the tank bottom.

The equipment is very simple, but it has no separating part and it lacks anaerobic pretreatment, without which one cannot reach high quality sewage purification.

Another known equipment for the treatment of sewage for domestic use is disclosed in US 3415378.

Residential treatment plants are mainly used by economically secured persons preferring modern life style. Nevertheless, structural shortcomings lead to marked degradation in functionality of most of the above described sewerage plants. To retain sufficient functionality, they make inadequately high demands on care and operational control. These circumstances result then in relatively high instability of operation of small residential WTP-s and, consequently, in unsatisfactory efficiency of the treatment process.

It is true, that recently used technologies of waste water treatment from small local sources of pollution ensure essential needs of their treatment (contact of unrefined waste water with activated sludge, separation of biological sludge from purified water, compensation of balance of material and hydraulic load, but the state of the art neither solves nor controls the qualitative character and properties of the activated sludge biomass. This results especially from extremely high sensitivity of these small wastewater treatment units to highly variable and instable character of raw waste water, as well as from frequent changes of structure and properties of the activated sludge biomass, which often results in secondary deterioration of quality of treated waste water.

In practice, there are generally used technical and technological solutions focusing in a greater extent either on:
- building operational stability of the object of WTP biological unit with insufficient technological operational capacity, or on
- technological operational capacity of the object of WTP biological unit with insufficient building operational stability, or possibly on
- low sale price of the object of WTP biological unit at the expense of its reliability and functionality.

From the technological point of view, the technologies of treating sewage waters from small local sources of pollution, available at present, are ready to eliminate organic pollution, partially eliminate nitrogen and, to a minimum extent, eliminate phosphorus, wherein the basic requirements for quality of purified waters are given by the legislation in affect.

At the conclusion, it is to be noticed that based on real needs of treating sewage waters from small local sources of pollution the waste treatment object for such source of pollution must exhibit high operational stability and must contain technical and technological elements which specifically eliminate variations and control the behavior of biocenosis (structure) of activated sludge and so minimize requirements on operational care and exhibit the necessary efficiency of treatment on a long-term basis.

The aim of the present invention is to eliminate or possibly at least to minimize disadvantages of the present equipments for waste water treatment and to fulfill requirements missing so far.

### Disclosure of Invention

An equipment for biological treatment of waste water according to the present invention consists of a tank containing an activation space, divided into an aerated and a non-aerated part, a separating space, an inlet for waste water, an outlet for treated water, at least one pumping device for pumping over the activated sludge, and at least one aeration element connected with a compressed air distributor, and a housing. The invention subject-matter consists in that the activation space equipped with a waste water inlet is divided into a primary activation space and an aeration activation space by a separating element under an angle of 40 to 89° relative to a horizontal plane. The separating element creates over the tank bottom a gap of the size of 3 to 50 cm and in the upper part it ends over the operational water level and under the upper edge of the separating space equipped with the outlet for purified water. The aeration element connected with the compressed air distributor, is located at the bottom of the aeration activation space, behind the gap created by the separating element, at a distance ensuring air penetration only into the aeration activation space and preventing its penetration into the primary activation space. The pump for pumping over the thickened activated sludge into the primary activation space is located at the lower part of the separating space.

The separating element may consist of a flat separating wall inclined at a corresponding angle, or a separating wall which is at least once broken, which wall is located in the lower part at the corresponding angle and in the upper part is perpendicular to the operational water level.

The equipment for treatment of waste water according to the present invention allows simpler operation of the purification process. It divides the activation (purifying) space into two functional spaces - primary and aeration - wherein the process of purification takes place in both of the spaces, thus allowing reduction of the overall volume of the equipment.

The structure of the separating element and the character of its placement in the activation space create special hydraulic conditions in the primary activation space, resulting in the desired selection of sewages - "separating" the impurities in sewages into settleable, which are already able to be decomposed by the activated sludge, and unsettleable or poorly settleable (for example fats), which require a longer retaining period in the upper part of the primary activation space, namely up to the moment when they are able to fall to the lower part and to be treated by the activated sludge. In a case of foaming up the content of the primary activation space, the difference in height between the separating element and the wall of the separating space prevents the foam from flowing into the separating space and polluting the already purified water. The mouth of the pump main for feeding activated sludge from the separating space to water level in the primary activation zone ensures continuous breaking of poorly settleable impurities at water surface, preventing their setting and solidification at the equipment walls, and so eliminates necessity of their troublesome removal.

The fact that functional interconnection of the wastewater treatment plant spaces is situated in its lower part allows withdrawing the excess sludge from any of its parts, while the level falls during desludging uniformly in all of the spaces.

Character of the gap and location of the aeration element ensure controlled selection of influent sewages in the absence of air by mutual action of the forced flow of waste water and activated sludge through the gap, and subsequently the proper purification process, taking place in the aeration activation space under composite action of air from the aeration element.

The distance of the aeration element from the gap ensuring penetration of air into the aeration activation space only and preventing its penetration into the primary activation space is adjusted according to the tank dimensions and the gap size.

A not negligible advantage consists in the fact that the equipment body - the tank - may be produced by centrifugal casting, thus minimizing possibility of integrity failure of its walls at joints and positively influencing its operational reliability. The equipment body (the tank) may have a shape of a cylinder, truncated cone or truncated pyramid, wherein the shapes of truncated cone or truncated pyramid are preferred from the point of view of transport (the bodies may be inserted into each other, in consequence of which more of them may be fitted on the loading area of a transport means).

### Brief Description of Drawings

The equipment for biological treatment of waste water according to the present invention is shown in the accompanying drawings, where Fig. 1 is a cross-section through a body of the equipment with a separating element in the form of a flat separating wall, Fig. 2 shows a cross-section through a body of the equipment with a separating element in the form of a once broken separating wall, and Fig. 3 shows a cross-section through a body of the equipment in the form of a truncated cone with a separating element in the form of a flat separating wall and with separating space formed by a separate tank.

### Examples of Invention Embodiments

### Example 1

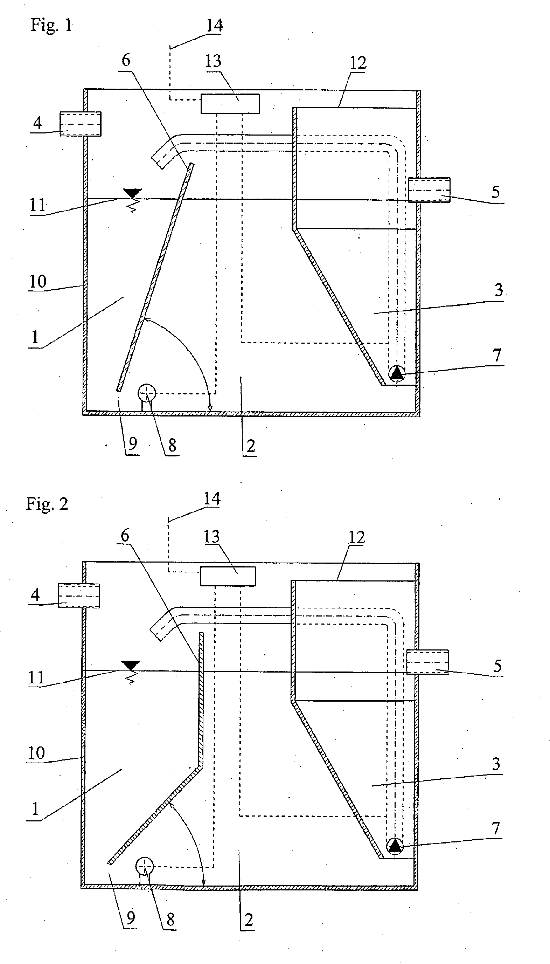

Equipment for biological treatment of waste water according to Fig. 1 consists of a body 10 of the equipment (the tank), separating space 3, separating element 6, pump 7 for recirculating the activated sludge, aeration element 8, air distributor 13 for distributing compressed air, inlet 14 for compressed air from an air compressor. Moreover, the equipment includes - as standard parts - a time switchboard, housing, attachment, as well as rubber seals, which are not shown.

Body 10 of the equipment (a tank in the form of a cylinder) with a height of ca 1700 mm and a diameter of ca 1500 mm is preferably produced by centrifugal casting under standard conditions with a wall thickness of at least 6 mm. On the outer side it is provided with transverse, mutually parallel ribs (not shown). In the inner wall of body 10, there are formed two pairs of slots (not shown): the separation tank, forming separating space 3 with outlet 5 for purified water, is inserted into one pair of the slots. The separating space is preferably also produced, like the tank, by centrifugal casting, the wall thickness is ca 6 mm and it is attached to body 10 of the equipment so that it is inserted into the slots and secured by screws of stainless steel. It is open both in the upper and in the lower part, wherein pump 7 is located in the lower part (here a mammoth pump with secured air inlet, running through the separating space 3 even beyond the operational water level 11) and clamped in holders.

In the second pair of slots, there is mounted a separating element 6, which is also secured by screws of stainless steel. The separating element 6 is formed by a wall, which has a shape of a part of an ellipse and thickness of 4 to 6 mm (depending on the kind of material used), and under an angle α of 83° (in relation to the horizontal plane of the bottom) it divides the activation space into a primary activation space 1, into which the inlet 4 for the sewage water opens, and an aeration activation space 2, and it creates over the bottom a 200 mm gap 9. The upper edge of the separating wall is 100 mm over the operational water level 11 at a distance of 125 mm from the upper edge 12 of the separating space. In a case, where the separating wall ends over the level of the pump 7 mouth, it has in its upper part an opening for its inserting. At a given distance from the gap 9 (here 155 mm), there is formed at least one holder for the aeration element 8, made of polypropylene tube with an aeration membrane, which element is connected to the air distributor 13 by a hose.

In body 10 of the equipment, there are embedded nuts (not shown) for attaching holders for the air distributor hoses. The tank bottom may be reinforced in a known way.

Other parts of the equipment for biological treatment of sewage waters, which have not been mentioned here, are both generally known to the experts in this field and follow from the corresponding legal regulations (norms).

Waste water comes through the inlet into the primary activation space, where, after settling of the settleable fraction, it comes to its first contact with the activated sludge in the absence of air. By forced flow of the settleable fraction of sewages and activated sludge through the gap by means of the aeration element, the sewages and activated sludge come into the aeration activation space, where the proper biological treatment of the sewages in the presence of air and under agitating the content of the aeration activation space takes place.

In the course of purification process the sludge mixture is pushed into the separating space, where separation of purified water from the activated sludge takes place. The purified water is withdrawn through an outlet by a duct to the outside of the equipment object. The thickened activated sludge is pumped over (re-circulated) as return sludge into the primary activation space, and the whole purification process is repeated.

Poorly settleable components of the sewages remain at the water surface, where they are disintegrated by the return sludge and in the course of time also these components fall down and their treatment (decomposition) by the activated sludge takes place.

### Example 2

An equipment for waste water treatment shown in Fig. 2 differs from that in Example 1 by the fact that the separation element 6 is formed by once broken separation wall, which is placed in the lower part under an angle of 46°, in the upper part it is perpendicular to the operational water level 11 and the size of gap 9 is 250 mm. The upper edge of the separation wall is 85 mm over the operational water level 11.

### Example 3

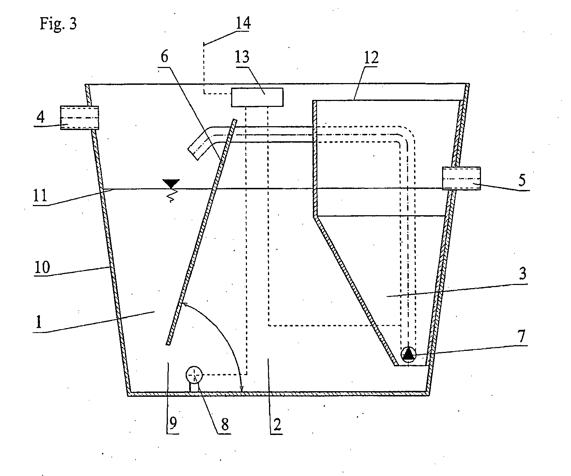

An equipment for waste water treatment shown in Fig. 3 differs from that in Example 1 by the fact that body 10 of the equipment is formed by a tank in the form of a truncated cone with the diameter of the lower part of ca 1200 mm and of the upper part of ca 1500 mm. The separating space is formed by a separated separating tank, which consists of two parts: a truncated cone and two square pyramids, and it is secured in body 10 of the equipment by screws of stainless steel.

### Industrial Applicability

The equipment for biological treatment of waste water may be used anywhere, where it is necessary to treat waste water, but it is preferable especially for small local sources of pollution (residential wastewater treatment plants).

### List of reference signs

- 1: primary activation space
- 2: aeration activation space
- 3: separating space
- 4: inlet for waste water
- 5: outlet for purified water
- 6: separating element
- 7: pump
- 8: aeration element
- 9: gap
- 10: equipment body
- 11: operational water level
- 12: upper edge of the separating space
- 13: air distributor
- 14: compressed air inlet

## Claims

1. Equipment for biological treatment of waste water, consisting of a tank and a housing, where the tank includes an activation space, a separating space, an inlet for waste water, an outlet for purified water, at least one pump for pumping over the activated sludge and at least one aeration element connected to a compressed air distributor,
**characterized in that**
the activation space provided with an inlet (4) for sewage water is divided to primary activation space (1) and aeration activation space (2) by a separation element (6) under an angle (α) of 40 to 89°, in relation to a horizontal plane, so, that the separating element (6) creates over the activation space bottom a gap (9) having a size of 3 to 50 cm and in the upper part it ends over the operational water level (11) and, simultaneously, under the upper edge (12) of the separating space (3), provided with an outlet (5) for purified water, wherein an aeration element (8), connected to a distributor (13) of compressed air, is located at the bottom of the aeration activation space (2) behind the gap (9) at a distance ensuring penetration of air only into the aeration activation space (2), and a pump (7) for pumping over the thickened activated sludge into the primary activation space (1) is located in the lower part of the separating space (3).

2. Equipment according to claim 1, **characterized in that** the separating element (6) is an at least once broken separating wall, which is in its upper part perpendicular to the operational water level (11).

## Patentansprüche

1. Einrichtung zur biologischen Abwasserreinigung, bestehend aus einem Sammelbecken und einer Abdeckung, wobei der Sammelbecken einen Aktivierungsraum, einen Trennbereich, einen Schmutzwasserzulauf, einen Ablauf des gereinigten Wassers, wenigstens eine Pumpe für Umpumpen des aktivierten Schlamms und wenigstens ein mit einem Druckluftverteiler verbundenes Durchlüftungselement beinhaltet,
**dadurch gekennzeichnet, dass**
der mit dem Schmutzwasserzulauf (4) ausgestattete Aktivierungsraum in einen primären A1. ktivierungsraum (1) und einen aeroben Aktivierungsraum (2) mithilfe eines Trennelements (6) unter dem Winkel (a) von 40 bis 89°, bezüglich der waagerechten Ebene so unterteilt wird, dass das Trennelement (6) über Aktivierungsraumboden einen Spalt (9) der Größe von 3 bis 50 cm bildet und in dem oberen Bereich über dem Betriebswasserspiegel (11) und gleichzeitig unter der oberen Kante (12) des mit dem Ablauf (5) des gereinigten Wassers ausgestatteten Trennbereichs (3) endet, wobei das mit einem Druckluftverteiler (13) verbundene Durchlüftungselement (8) am Boden des aeroben Aktivierungsraums (2) hinter dem Spalt (9) in einem die Durchdringung der Luft nur in den aeroben Aktivierungsraum (2) sichernden Abstand angeordnet ist, und die für das Umpumpen von eingedicktem aktiviertem Schlamm in den primären Aktivierungsraum (1) eingesetzte Pumpe (7) im unteren Bereich des Trennbereichs (3) angeordnet ist.

2. Einrichtung nach Anspruch 1, **dadurch gekennzeichnet, dass** das Trennelement (6) eine wenigstens einmal abgewinkelte Trennwand ist, die im oberen Bereich senkrecht zum Betriebswasserspiegel (11) verläuft.

## Revendications

1. Equipement pour le traitement biologique des eaux usées, constitué d'un bassin et d'un couvercle, le bassin étant constitué d'une zone d'activation, d'une zone de séparation, d'une arrivé des eaux usées, d'une sortie des effluents traités, d'au moins une pompe pour pomper des boues activées et d'au moins un élément associé avec le distributeur d'air comprimé
**caractérisé en ce que**
la zone d'activation, équipée de l'arrivé (4) des eaux usées, est divisée en une zone d'activation primaire (1) et une zone d'activation-aération (2) par un élément (6) de séparation formant un angle (a) entre 40° et 89° par rapport au plan horizontal, de façon que l'élément de séparation (6) crée une fente (9) de la taille de 3 à 50 cm au-dessus du fond de la zone d'activation et il dépasse par la partie supérieure le niveau d'opération (11) d'eau, la partie supérieure se terminant au dessous du bord (12) de la zone de séparation (3) munie d'une sortie (5) de l'eau traitée, l'élément d'aération (8) associé à un distributeur d'air comprimé (13) se situant au fond de la zone d'activation-aération (2) derrière la fente (9) à une distance assurant l'admission d'air uniquement dans l'espace d'activation-aération (2), et **en ce que** la pompe (7) pour pompage de boues activées concentrées dans la zone d'activation primaire (1) est installée dans la partie basse de la zone de séparation (3).

2. Equipement selon la revendication 1, **caractérisé en ce que** l'élément de séparation (6) est sous forme d'une cloison au moins une fois pliée et dans la partie supérieure perpendiculaire au niveau (11) d'eau d'opération.
